# EUROPEAN PATENT SPECIFICATION

(11) **EP 0 408 321 B1**
(45) Date of publication and mention of the grant of the patent: **14.04.1993**
(21) Application number: 90307554.7
(22) Date of filing: 10.07.1990
(51) Int. Cl.: B01J 37/00, B01J 31/12, B01J 27/04, B01J 27/047, B01J 27/051, C10G 45/00

(54) **Transition metal tris-dithiolene and related complexes as precursors to active catalysts**
Übergangsmetall-tris-dithiolen und verwandte Komplexe als Vorprodukte für aktive Katalysatoren
Composé de métal de transition et de tridithiolène et complexes similaires comme précurseurs de catalyseur actifs

(30) Priority: 11.07.1989 US 378565
(43) Date of publication of application: 16.01.1991
(73) Proprietor: EXXON RESEARCH AND ENGINEERING COMPANY, Florham Park, New Jersey 07932-0390 (US)
(72) Inventor: Halbert, Thomas Risher, Baton Rouge, Louisiana (US); Chianelli, Russell Robert, Somerville, New Jersey (US); Stiefel, Edward Ira, Bridgewater, New Jersey (US); Jacobson, Allan Joseph, Princeton, New Jersey (US)
(74) Representative: Somers, Harold Arnold

(56) References cited:
- EP-A- 0 028 667
- EP-A- 0 178 100
- US-A- 4 431 747
- US-A- 4 681 958

## Description

### FIELD OF THE INVENTION

This invention relates generally to catalytic hydrotreating of petroleum feedstocks and more specifically to novel transition metal-containing catalysts especially suitable for hydrodesulfurization, hydrodenitrogenation, and aromatics hydrogenation.

### BACKGROUND OF THE INVENTION

Transition metal tris-dithiolate complexes and the related ortho-aminobenzenethiolate complexes have been reported in the literature. See, for example, Burns, R. P. et al., Adv. Inorg. Chem. Radiochem., 22, p. 303-348 (1979) and references therein; and Gardner, Joseph K. et al., Inorg. Chem, 17, p. 897-904 (1978). Molybdenum tris-dithiolate complexes have been reported as catalysts for the isomerization of norbornadiene to quadricyclane. See R. B. King, J. Mol. Cat., 4, p. 361-373 (1978).

EP-A-178100 describes supported hydroprocessing catalysts comprising a sulfide of trivalent Cr, Mo, W or a mixture thereof obtained by compositing a support material with a precursor compring a mixture of hydrated oxide of trivalent chromium and a salt containing a thiometallic anion of Mo or W and a cation comprising the conjugate acid of at least one neutral, nitrogen containing polycondensate ligand and heating the composite in the presence of sulfur and hydrogen in an oxygen-free atmosphere.

EP-A-28667 describes a high surface area catalyst prepared by adding a decomposable compound of a catalytic metal to a hydrocarbon chargestock in the presence of hydrogen or hydrogen sulphide containing gas.

US-A-4431747 discloses a supported carbon-containing molybdenum sulfide and tungsten sulfide catalyst useful for conducting methanation and hydrotreating reactions, principally the latter, can be formed by compositing a preselected quantity of a porous, refractory inorganic oxide with a complex salt characterized by the formula${\text{B}}_{\text{x}} {\text{[MO}}_{\text{y}} {\text{S}}_{\text{4-y}} \text{]}$
where B is an organo or hydrocarbyl substituted diammonium ion, an organo or hydrocarbyl substituted ammonium ion or quaternary ammonium ion, or an ionic form of a cyclic amine containing one or more basic N atoms, x is 1 where B is an organo or hydrocarbyl substituted diammonium ion, or 2 where B is an organo or hydrocarbyl substituted ammonium or quaternary ammonium ion or an ionic form of a cyclic amine containing one or more basic N atoms, M is molybdenum or tungsten, and y is 0, or a fraction or whole number ranging up to 3, and heat decomposing the salt of said catalyst precursor composite in the presence of hydrogen, hydrocarbon and sulfur to form said supported carbon-containing molybdenum sulfide or tungsten sulfide catalyst.

It has now been discovered that certain transition metal-containing complexes thermally decompose to form solids containing the transition metal, sulfur and carbon and that the resulting products are particularly suitable as catalysts for hydrodesulfurization, hydrodenitrogenation and aromatics hydrogenation.

According to on aspect of the invention a catalyst suitable for hydrodesulfurization, hydrodenitrogenation and aromatics hydrogenation is obtainable by the thermal decomposition in a reducing atmosphere at a temperature in excess of 200°C of a catalyst precursor comprising a transition metal complex of the type MLⁿ₃ in which M is a metal selected from Mo, W, Re and mixtures thereof, n represents the total charge of the metal complex and is 0, -1, or -2, and L is a ligand selected from dithiolate or aminobenzenethiolate ligands having the general formula 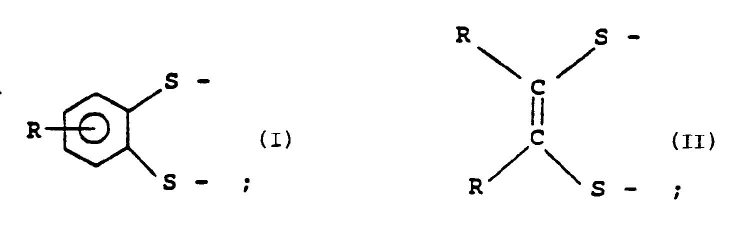 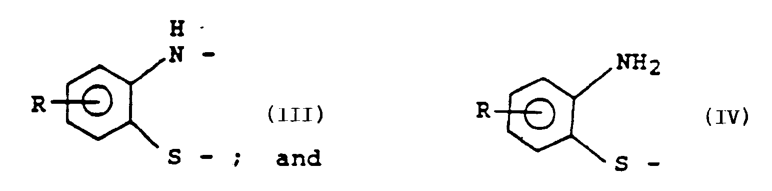
in which R is C₁₋₁₂ alkyl, C₆ aryl or C₇₋₁₈ alkyl-substituted aryl and, when L is dithiolate, R may also be CF₃ or CN, said complex including a cation when n is other than 0. When L is the ligand of formula (IV), R may also be hydrogen.

The invention includes the use of a catalyst as described above for hydrodesulfurization, hydrodenitrogenation and aromatics hydrogenation.

The invention further includes a process for hydrotreating a petroleum feedstock to lower the sulfur, nitrogen and/or aromatic content thereof which comprises contacting said feedstock with a preformed catalyst as described above in the presence of hydrogen at a temperature in excess of 200°C.

The invention also includes a process for hydrotreating a petroleum feedstock to lower the sulfur, nitrogen and/or aromatic content thereof which comprises contacting said feedstock in the presence of hydrogen at a temperature in excess of 200°C with a transition metal complex as described above.

As will be readily appreciated, when n is other than zero, the complex will include a cation such as ammonium, alkylammonium, and quaternary alkylammonium.

Examples of preferred complexes include Mo(tdt)₃, Mo(abt)₃, (TEA⁺)₂Mo(tdt)₃, W(abt)₃ and Re(abt)₃ wherein tdt is 3,4-toluene dithiolate, abt is ortho-aminobenzenethiolate, and TEA is tetraethylammonium anion.

The preparation of these precursors is well known and does not form a part of this invention. Methods used to prepare them, for example, may be found by consulting the references cited above.

These compounds have been found to be useful catalyst precursors in the preparation of catalysts for hydrodesulfurization (HDS), hydrodenitrogenation (HDN), and aromatics hydrogenation. For example, when charged into a batch-type stirred reactor containing a mixture of 5 weight percent dibenzothiophene (DBT) and decalin, Mo(tdt)₃ was effective in removing sulfur from the mixture. In another example, using a mixture containing 0.8 weight percent sulfur as DBT, 0.8 weight percent nitrogen as 1,2,3,4-tetrahydroquinoline (THQ), and 5 weight percent acenapthylene in decalin, Mo(abt)₃ was effective in removing nitrogen and hydrogenating the acenapthylene.

The molybdenum tris-dithiolate and related complexes may be thermally decomposed by heating the complex at elevated temperatures generally in excess of about 200°C, and preferably in the range of about 250° to 350°C, in a reducing atmosphere such as one containing hydrogen. The decomposition preferably is conducted in the presence of a solvent. Indeed, the precursors may be thermally decomposed in the petroleum hydrocarbon being catalytically hydrotreated.

The molybdenum, tungsten and rhenium tris-dithiolate and related complexes are examples of catalyst precursor molecules in which sulfur and carbon are covalently bound in the metal complex. We refer to these molecules as "inner sphere" sulfur-and carbon-containing precursors. The advantageous nature of these complexes as catalyst precursors is believed to derive from the presence of this "inner sphere" sulfur and carbon during the decomposition to form the active catalytic material.

The precursors, of course, may be used either singly or mixed with one another for forming catalysts of the present invention.

The invention will be further understood by reference to the following examples.

### Example 1

Molybdenum tris(toluene-3,4-dithiolate) was prepared by the following procedure:

Toluene-3,4-dithiol (5.9 g, 0.38 mole) was dissolved in a solution containing 15 ml 5% aqueous sulfuric acid and 135 ml 95% ethyl alcohol. A solution of Na₂MoO₄ (2.49 g, 0.126 mole) in 150 ml water was added rapidly with strong stirring. After stirring for 40 min, the mixture was extracted 2 times with 250 ml CHCl₃. The extracts were washed with water, and dried over anhydrous MgSO₄. The chloroform solution was mixed with 200ml dry silica gel, and solvent removed under reduced pressure. The resulting mixture was poured onto a column of dry silica (60 x 7 cm). Elution with 2:1 hexane/CHCl₃ gave 1.85 g pure Mo (tdt)₃.

### Example 2

The following describes the preparation of molybdenum tris(aminobenzenethiolate). o-Aminobenzenethiol (2.2 g) was dissolved in 10ml 5% H₂SO₄ and 90ml 95% ethanol. A solution of Na₂MoO₄ (1.62 g) was poured into the aminobenzenethiol solution with vigorous stirring. After 10 minutes, the stirring was stopped, and the mixture allowed to stand for 30 min. Filtration gave (after drying) 2.8 g green solid Mo(abt)₃.

### Example 3

Bis(tetraethylammonium)-molybdenum-tris (toluene-3,4-dithiolate) was prepared as follows: Mo(tdt)₃ (2.03 g) was dissolved in 120ml tetrahydrofuran under inert atmosphere. A solution of n-butyllithium (4.6 ml, 1.5 M solution in hexane) was added slowly. After stirring 1/2 hour, tetraethyl ammonium bromide (excess) was dissolved in 50ml methanol, and added. The product (1.4 g. blue-black solid) was precipitated by addition of 250 ml diethylether, filtered, and dried.

### Example 4

Rhenium tris-aminobenzenethiolate (Re(abt)₃) was prepared as follows:

A solution containing 5.0 g. (0.017 mole) of potassium perrhenate in 500 ml hot water was added to a solution of 6.0 ml o-aminobenzenethiolate and 50 ml 5% H₂SO₄ in 500 ml 95% ethanol. After heating for one hour at 100°C, the resulting brown crystalline material was filtered, washed with ethanol and ether, and dried. This solid was dissolved in 500 ml acetone, filtered and the filtrate diluted with 250 ml water. After standing for 3 days, the precipitated dark blue needles of Re(abt)₃ were filtered and dried.

### Examples 5, 6 and 7

The precursors of Examples 1 through 3 were made into 20-40 mesh 0.841 - 0.420 mm (U.S. Sieve size) particles and placed in an autoclave reactor basket. The autoclave was charged with 100 ml of 5 weight percent dibenzothiophene (DBT) in decalin. The autoclave was heated at 350°C while flowing hydrogen through the reactor at 100 ml per minute with a 750 rpm spinning rate for the basket. The concentrations of DBT and products were determined by gas chromatography. The results are shown in Table I below.

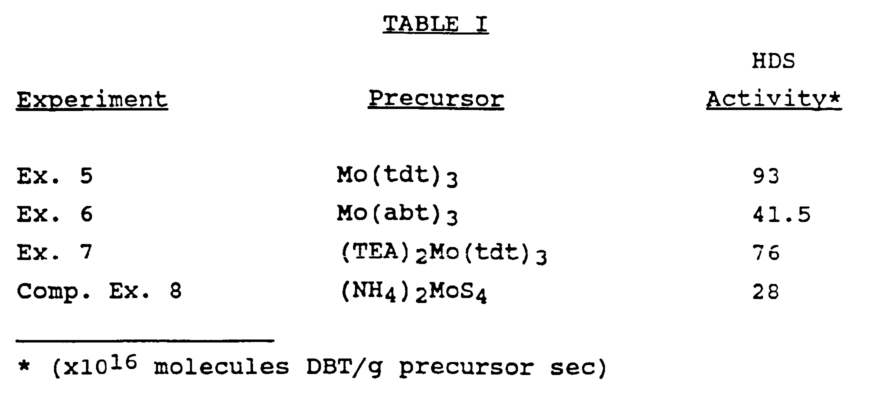

### Comparative Example 8

Molybdenum sulfide catalyst was prepared as follows: Ammonium tetrathiomolybdate (NH₄)₂MoS₄, (10 g) was heated at 350°C for two hours under a flow of gas consising of 15% H₂S in H₂. The resulting MoS₂ was cooled under H₂S/H₂ gas to 100°C, then cooled to room temperature under nitrogen.

Following the procedure of Examples 5, 6 and 7, 1 gram of molybdenum sulfide prepared in this way was used in the hydrodesulfurization of DBT. The results are also shown in Table I.

### Example 9

This example illustrates the ex-situ formation of an active HDS/HDN catalyst (preforming). A sample of Mo(abt)₃ (2 g) was placed in a 300 ml autoclave with 200 ml decalin. The autoclave was pressurized to 157 N/cm² (225 psi) with H₂, and then heated to 350°C for several hours. After cooling to room temperature, the reactor contents were filtered, and the black solid catalyst washed with toluene, dried in vacuo, and used in subsequent testing. The surface area of this material was determined to be 71.2 m²/g. Elemental analysis of the catalyst gave the following results: C, 6.67%; H, 1.12%; N, 0.68%; Mo, 45.72%; S, 35.07%.

### Examples 10, 11 and 12

The precursor of Examples 2 and 4, and the preformed catalyst from Example 9, were placed in separate autoclaves. Each autoclave was charged with 100 cc's of feed containing 0.8 wt. percent sulfur as dibenzothiophene, 0.8 wt. percent nitrogen as 1,2,3,4-tetrahydroquinoline, and 5 wt. percent acenapthylene. The autoclave was heated at 350°C, while flowing H₂ through the reactor at 100 ml per minute. The mixture of feed and catalyst was stirred at 750 rpm. Concentrations of desulfurized products (biphenyl and cyclohexyl benzene), denitrogenated products (propylbenzene, propylcyclohexane, propylcyclohexene), and hexahydroacenapthylene were determined by gas chromatography of samples of the product withdrawn from the reactor at intervals during each 7 hour run. Zero-order rates of HDS, HDN, and hydrogenation are shown in Table II.

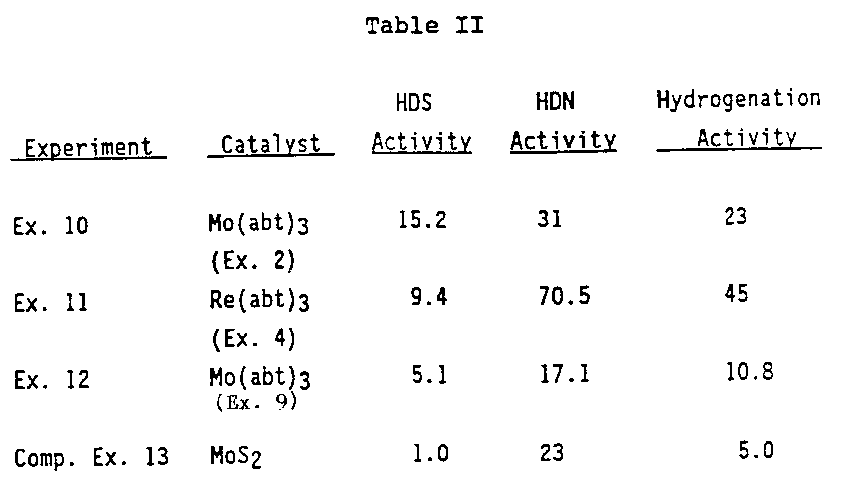

### Comparative Example 13

The procedure of Examples 10, 11 and 12 were followed, except that the catalyst from Comparative Example 8 was employed. The results are shown in Table II.

## Claims

1. A catalyst suitable for hydrodesulfurization, hydrodenitrogenation and aromatics hydrogenation obtainable by the thermal decomposition in a reducing atmosphere at a temperature in excess of 200°C of a catalyst precursor comprising a transition metal complex of the type MLⁿ₃ in which M is a metal selected from Mo, W, Re and mixtures thereof, n represents the total charge of the metal complex and is 0, -1, or -2, and L is a ligand selected from dithiolate or aminobenzenethiolate ligands having the general formula 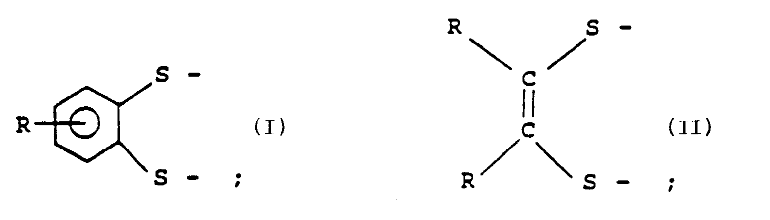 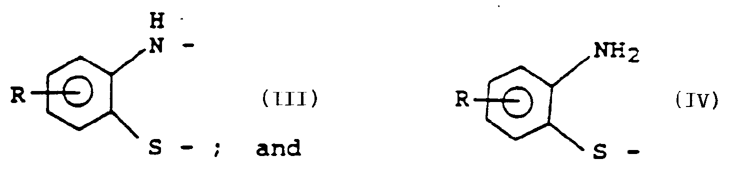 in which R is C₁₋₁₂ alkyl, C₆ aryl or C₇₋₁₈ alkyl-substituted aryl and, when L is dithiolate, R may also be CF₃ or CN, the complex including a cation when n is other than 0. When L is the ligand of formula (IV), R may also be hydrogen.

2. A catalyst according to claim 1 wherein said temperature is from 200 to 350°C.

3. A catalyst according to claim 1 or claim 2 wherein said reducing atmosphere is a hydrogen containing atmosphere.

4. A catalyst according to any preceding claim wherein M is Mo and L is selected from 3,4-toluene dithiolate and ortho-aminobenzenethiolate.

5. A catalyst according to any of claims 1 to 3 wherein said complex is rhenium tris-aminobenzenethiolate.

6. A catalyst according to any of claims 1 to 3 wherein said complex includes an ammonium, alkylammonium or quaternary ammonium cation.

7. A catalyst according to claim 6 wherein said complex is bis(tetraethylammonium)-molybdenum-tris(toluene-3,4-dithiolate).

8. The use of a catalyst according to any preceding claim for hydrodesulfurization, hydrodenitrogenation and aromatics hydrogenation.

9. A process for hydrotreating a petroleum feedstock to lower the sulfur, nitrogen and/or aromatic content thereof which comprises contacting said feedstock with a preformed catalyst according to any of claim 1 to 7 in the presence of hydrogen at a temperature in excess of 200°C.

10. A process for hydrotreating a petroleum feedstock to lower the sulfur, nitrogen and/or aromatic content thereof which comprises contacting said feedstock in the presence of hydrogen at a temperature in excess of 200°C with a transition metal complex as defined in claim 1.

11. A process according to claim 10 wherein said temperature is from 200 to 350°C.

12. A process according to claim 10 or claim 11 wherein said complex is selected from molybdenum tris-(toluene dithiolate), molybdenum tris-(ortho-aminobenzenethiolate), rhenium tris-(ortho-aminobenzenethiolate) and bis(tetraethylammonium)-molybdenum-tris(toluene-3,4-dithiolate).

## Patentansprüche

1. Katalysator, der zur hydrierenden Entfernung von Schwefel, hydrierenden Entfernung von Stickstoff und Hydrierung von Aromaten geeignet ist und der durch thermische Zersetzung einer Katalysatorvorstufe bei einer Temperatur oberhalb von 200°C in einer reduzierenden Atmosphäre erhältlich ist, wobei die Katalysatorvorstufe einen Übergangsmetallkomplex des Typs MLⁿ₃ umfaßt, in dem M ein Metall ist, das aus Mo, W, Re und Mischungen daraus ausgewählt ist, n die Gesamtladung des Metallkomplexes repräsentiert und 0, -1 oder -2 ist und L ein Ligand ausgewählt aus Dithiolat- oder Aminobenzolthiolatliganden mit der allgemeinen Formel 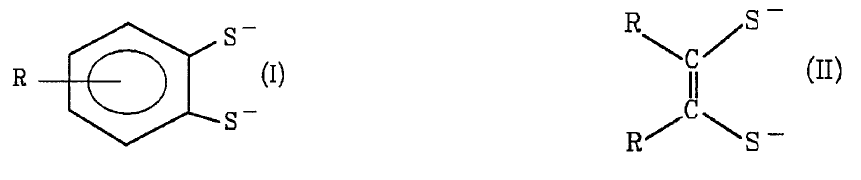 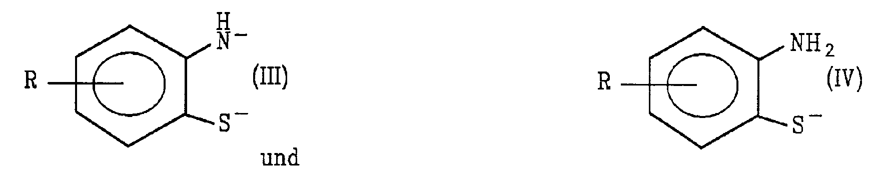 ist, wobei R C₁₋₁₂-Alkyl, C₆-Aryl oder alkylsubstituiertes C₇₋₁₈-Aryl ist, und wobei R außerdem CF₃ oder CN sein kann, wenn L Dithiolat ist und der Komplex ein Kation einschließt, wenn n von 0 verschieden ist; wenn L der Ligand mit der Formel (IV) ist, kann R außerdem Wasserstoff sein.

2. Katalysator nach Anspruch 1, wobei die Temperatur 200 bis 350°C beträgt.

3. Katalysator nach Anspruch 1 oder 2, wobei die reduzierende Atmosphäre eine Wasserstoff enthaltende Atmosphäre ist.

4. Katalysator nach einem der vorhergehenden Ansprüche, bei dem M Mo ist und L ausgewählt ist aus 3,4-Toluoldithiolat und ortho-Aminobenzolthiolat.

5. Katalysator nach einem der Ansprüche 1 bis 3, bei dem der Komplex Rhenium-tris(aminobenzolthiolat) ist.

6. Katalysator nach einem der Ansprüche 1 bis 3, bei dem der Komplex ein Ammonium-, Alkylammonium- oder quartäres Ammoniumkation einschließt.

7. Katalysator nach Anspruch 6, bei dem der Komplex Bis(tetraethylammonium)molybdän-tris(toluol-3,4-dithiolat) ist.

8. Verwendung eines Katalysators gemäß einem der vorhergehenden Ansprüche zur hydrierenden Entfernung von Schwefel, hydrierenden Entfernung von Stickstoff und Hydrierung von Aromaten.

9. Verfahren zur Wasserstoffbehandlung eines Erdöleinsatzmaterials, um dessen Schwefel-, Stickstoff- und(oder Aromatengehalt zu senken, bei dem das Einsatzmaterial mit einem vorab gebildeten Katalysator gemäß einem der Ansprüche 1 bis 7 in Gegenwart von Wasserstoff bei einer Temperatur oberhalb von 200°C kontaktiert wird.

10. Verfahren zur Wasserstoffbehandlung eines Erdöleinsatzmaterials, um dessen Schwefel-, Stickstoff- und(oder Aromatengehalt zu senken, bei dem das Einsatzmaterial in Gegenwart von Wasserstoff bei einer Temperatur oberhalb von 200°C mit einem Übergangsmetallkomplex wie in Anspruch 1 definiert kontaktiert wird.

11. Verfahren nach Anspruch 10, bei dem die Temperatur 200 bis 350°C beträgt.

12. Verfahren nach Anspruch 10 oder Anspruch 11, bei dem der Komplex ausgewählt ist aus Molybdän-tris(toluoldithiolat), Molybdän-tris(ortho-aminobenzolthiolat),Rhenium-tris(orthoaminobenzolthiolat) und Bis(tetraethylammonium)-molybdän-tris(toluol-3,4-dithiolat).

## Revendications

1. Catalyseur approprié à l'hydrodésulfurisation, l'hydrodésazotation et l'hydrogénation des aromatiques que l'on peut obtenir par décomposition thermique dans une atmosphère réductrice à une température dépassant 200°C d'un précurseur de catalyseur comprenant un complexe de métal de transition de type MLⁿ₃ où M est un métal choisi parmi Mo, W, Re et leurs mélanges, n représente la charge totale du complexe métallique et vaut 0, -1 ou -2, et L est un coordinat choisi parmi les coordinats de type dithiolate ou aminobenzènethiolate de formule générale 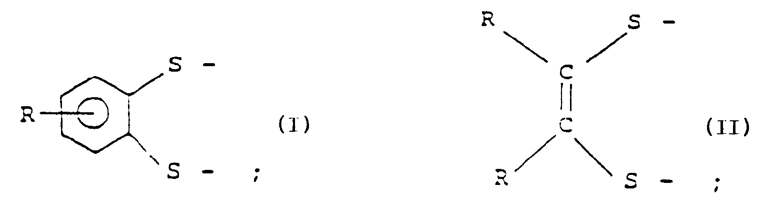 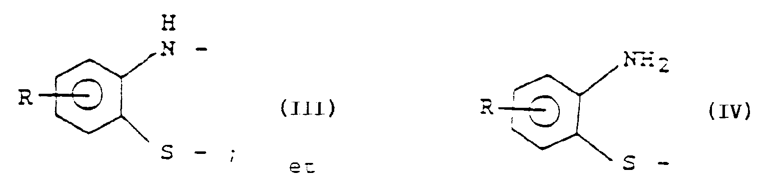 où R est un alkyle en C₁ à C₁₂, un aryle en C₆ ou un aryle substitué par un alkyle en C₇ à C₁₈ et, lorsque L est un dithiolate, R peut également représenter CF₃ ou CN, le complexe incluant un cation lorsque n est différent de 0, et lorsque L est le coordinat de formule (IV), R peut également être un hydrogène.

2. Catalyseur selon la revendication 1 dans lequel ladite température est de 200 à 350°C.

3. Catalyseur selon la revendication 1 ou la revendication 2 dans lequel ladite atmosphère réductrice est une atmosphère contenant de l'hydrogène.

4. Catalyseur selon l'une quelconque des revendications précédentes dans lequel M représente Mo et L est choisi entre le dithiolate de 3,4-toluène et le thiolate d'ortho-aminobenzène.

5. Catalyseur selon l'une quelconque des revendications 1 à 3 dans lequel ledit complexe est le tris-aminobenzènethiolate de rhénium.

6. Catalyseur selon l'une quelconque des revendications 1 à 3 dans lequel ledit complexe inclut un cation ammonium, alkylammonium ou ammonium quaternaire.

7. Catalyseur selon la revendication 6 dans lequel ledit complexe est le bis(tétraéthylammonium)-molybdènetris(toluène-3,4-dithiolate).

8. Application d'un catalyseur selon l'une quelconque des revendications précédentes à l'hydrodésulfurisation, l'hydrodésazotation et l'hydrogénation des aromatiques.

9. Procédé d'hydrotraitement d'une charge de pétrole pour abaisser sa teneur en soufre, en azote et/ou en aromatiques, dans lequel on met en contact ladite charge avec un catalyseur préformé selon l'une quelconque des revendications 1 à 7 en présence d'hydrogène à une température dépassant 200°C.

10. Procédé d'hydrotraitement d'une charge de pétrole pour abaisser sa teneur en soufre, en azote et/ou en aromatiques, dans lequel on met en contact ladite charge en présence d'hydrogène à une température dépassant 200°C avec un complexe de métal de transition tel que défini dans la revendication 1.

11. Procédé selon la revendication 10 dans lequel ladite température est de 200 à 350°C.

12. Procédé selon la revendication 10 ou la revendication 11 dans lequel ledit complexe est choisi entre le tris-(toluène-dithiolate) de molybdène, le tris(ortho-aminobenzènethiolate) de molybdène, le tris-(ortho-aminobenzènethiolate) de rhénium et le bis(tétraéthylammonium)-molybdène-tris(toluène-3,4-dithiolate).
